# EUROPEAN PATENT APPLICATION

(11) **EP 3 944 438 A1**
(43) Date of publication of application: **26.01.2022**
(21) Application number: 20187550.7
(22) Date of filing: 23.07.2020
(51) Int. Cl.: H02H 1/00, H02H 3/22, H02H 3/08

(54) **METHOD AND APPARATUS FOR PROTECTION OF AN ELECTRICAL LOAD AGAINST OVERVOLTAGE**

(71) Applicant: Future Systems Besitz GmbH, 96472 Rödental (DE)
(72) Inventor: STEINBERGER, Philipp, 96450 Coburg (DE); SPIEL, Peter, 93049 Regensburg (DE); FÖRST, Bernhard, 96317 Kronach (DE)
(74) Representative: Isarpatent

(57) **Abstract**

A protection apparatus (1) for protection of an electrical load (9), said protection apparatus (1) comprising: at least one input terminal (2) adapted to receive a power supply voltage; at least one semiconductor power switch (5) connected in series to the associated input terminal (2) in a power supply path (10) through which the electrical load (9) connected to an output terminal (3) of said power supply path (10) receives an electrical load current, I_{L}; said protection apparatus (1) further comprising: a control unit (8) having a microprocessor (8A) adapted to control a driver circuit (6) of said protection apparatus (1) to switch the at least one semiconductor power switch (5) provided in the power supply path (10) on or off in response to a received switch command (CMD), said protection apparatus (1) further comprising: at least one overvoltage detection circuit, ODC, (12) connected to an associated power supply path (10) of said protection apparatus (1) and adapted to detect an overvoltage state at the respective power supply path (10) of said protection apparatus (1) and to control the driver circuit (6) directly through control lines (12, 20) connected to a driver input (IN) at a low voltage side (6A) of the driver circuit (6) to switch off the at least one semiconductor power switch (5) provided within the associated power supply path (10) if an overvoltage state has been detected by the overvoltage detection circuit, ODC, (12) to provide protection of the connected electrical load (9) against overvoltage.

## Description

The invention relates to a method and apparatus for protecting an electrical load connected to an output terminal of a protection apparatus against overvoltage.

When an electrical voltage in a circuit or part of a load device is raised above an upper design limit, this is also known as overvoltage. There can be many different situations and conditions where an overvoltage may occur. Depending on its duration, an overvoltage event can be transient, i.e. an occurrence of a voltage spike, or permanent leading to a power surge. For example, lightning strikes can lead to overvoltages in the power supply network, which in turn cause the electrical loads connected to the power supply network to be damaged. Further, voltage spikes can be caused by electromagnetic induction when switching on or off inductive loads such as electrical motors or by switching heavy resistive AC loads. Due to a possible occurrence of transient overvoltages including voltage spikes, there is a need to switch off a connected load as fast as possible to avoid any damage of its internal circuitry.

Accordingly, it is an object of the present invention to provide a protection apparatus for protection of an electrical load against overvoltage to switch off a connected load within a minimal switch-off period.

This object is achieved according to a first aspect of the present invention by a protection apparatus comprising the features of claim 1.

The invention provides according to a first aspect a protection apparatus for protection of an electrical load against overvoltage,
said protection apparatus comprising:
at least one input terminal adapted to receive a power supply voltage, at least one semiconductor power switch connected in series to the associated input terminal in a power supply path through which the electrical load connected to an output terminal of the power supply path receives an electrical load current, wherein said protection apparatus further comprises a control unit, CU, having a microprocessor adapted to control a driver circuit of said protection apparatus to switch the at least one power switch provided in the power supply path either on or off in response to a received switch command,
wherein the protection apparatus further comprises at least one overvoltage detection circuit, ODC, connected to an associated power supply path of said protection apparatus and adapted to detect an overvoltage state at the respective power supply path of the protection apparatus and to control the driver circuit directly through control lines connected to a driver input at a low voltage side of the driver circuit to switch off the at least one semiconductor power switch provided within the associated power supply path within a short switch-off period if an overvoltage state has been detected by said overvoltage detection circuit, ODC, to provide protection of the connected electrical load against overvoltage,
wherein the short switch-off period is predefined by control signal propagation delays along the control lines and by propagation delays along the internal circuitry of the driver circuit.

In a preferred embodiment, the protection apparatus according to the first aspect of the present invention is able to switch off the at least one semiconductor power switch within the power supply path in a switch-off period of less than 1 msec. This is possible because the propagation delay of the internal circuitry of the driver circuit is less than 200 nsec.

In a preferred embodiment, the overvoltage detection circuit comprises a fast analog control path with minimum propagation delays such that a switch-off period of less than 1 psec is achieved for detected overvoltage transients in the power supply path. The sensitivity of the overvoltage detection circuit with respect to transients or permanent overvoltages can be adjusted in a possible embodiment by means of configurable threshold values.

In a possible embodiment of the protection apparatus according to the first aspect of the present invention, the control unit is connected to a user interface to receive a switch command.

The control unit of the protection apparatus having a microcontroller can switch the at least one semiconductor power switch in the power supply path either on or off in response to the received switch command by controlling the integrated driver circuit of the protection apparatus.

In an alternative embodiment of the protection apparatus according to the first aspect of the present invention, the control unit of the protection apparatus is connected to a system level controller of an automation system to receive a switch command. In this embodiment, the switching off of the at least one semiconductor power switch within the power supply path is performed under the control of the control unit, CU, in response to the switch command, CMD, received from the system level controller. The control unit, CU, can receive the switch command, CMD, from the system level controller in a possible implementation via a control interface.

In a further possible embodiment of the protection apparatus according to the first aspect of the present invention, the protection apparatus comprises three parallel power supply paths each connecting an input terminal with an associated output terminal. The at least one semiconductor power switch provided in each of the three power supply paths comprises in a possible embodiment an IGBT or a power MOSFET having a blocking voltage which exceeds the normal operation voltage of the power supply voltage applied to the input terminal of the power supply path of the protection apparatus.

In a further possible embodiment of the protection apparatus according to the first aspect of the present invention, a control gate of the at least one semiconductor power switch is connected directly to a driver output of the driver circuit.

In a further possible embodiment of the protection apparatus according to the first aspect of the present invention, the protection apparatus comprising several power supply paths comprises a corresponding number of associated overvoltage detection circuits, ODCs, wherein each associated overvoltage detection circuit can be connected either to the input terminal and/or to the output terminal of the respective power supply path.

In a further possible embodiment of the protection apparatus according to the first aspect of the present invention, each overvoltage detection circuit, ODC, connected to the input terminal or to the output terminal of the associated power supply path comprises a rectifier, in particular a bridge rectifier, adapted to rectify the electrical voltage at the respective terminal of the associated power supply path, and an analog-to-digital converter, ADC, adapted to convert a low-pass filtered signal into a digital signal applied to a digital comparator implemented in the microprocessor of the control unit, CU, of said protection apparatus and being adapted to compare the low-pass filtered signal output by the analog-to-digital converter, ADC, with a first adjustable digital threshold value to detect a low-frequency drift of the electrical voltage at the respective terminal of the associated power supply path and is further adapted to generate a high logic signal if a low-frequency drift is detected.

In a further possible embodiment of the protection apparatus according to the first aspect of the present invention, each overvoltage detection circuit, ODC, further comprises a fast analog comparator, in particular a Schmitt trigger circuit, adapted to compare the rectified voltage output by the rectifier with a threshold set point to detect overvoltage transients in the electrical voltage of the respective terminal of the associated power supply path and is further adapted to generate a logic enable signal to enable a switch-off of the at least one semiconductor power switch provided in the associated power supply path by the driver circuit if an overvoltage transient has been detected by the analog comparator of the overvoltage detection circuit, ODC.

In a further possible embodiment of the protection apparatus according to the first aspect of the present invention, the logical signal generated by the digital comparator implemented in the microprocessor of the control unit, CU, and the logic enable signal generated by the analog comparator of the overvoltage detection circuit, ODC, are logically combined by an AND gate of the overvoltage detection circuit, ODC, to provide a logical voltage state signal indicating a detected momentary voltage state of the respective terminal of the associated power supply path, wherein the logical voltage state signal is applied to the driver input at the low voltage side of the driver circuit.

In a further possible embodiment of the protection apparatus according to the first aspect of the present invention, an analog high-pass filter, HPF, is provided between the rectifier and the analog comparator and adapted to perform a high-pass filtering of the rectified voltage output by the rectifier.

In a still further possible embodiment of the protection apparatus according to the first aspect of the present invention, an analog low-pass filter, LPF, adapted to perform low-pass filtering of the rectified voltage output by the rectifier is provided between the rectifier and the analog-to-digital converter, ADC.

In a further possible embodiment of the protection apparatus according to the first aspect of the present invention, the rectifier of the overvoltage detection circuit, ODC, is connected via a potential separation circuit to the associated power supply path.

In a further possible embodiment of the protection apparatus according to the first aspect of the present invention, the driver circuit is adapted to supply a supervision signal to the microprocessor of the control unit, CU, adapted to inform the microprocessor about a current operation state of the driver circuit and/or about a current switching state of the at least one power switch within the associated power supply path.

In a further possible embodiment of the protection apparatus according to the first aspect of the present invention, the threshold set point of the analog comparator of the overvoltage detection circuit, ODC, is set by the microprocessor of the control unit via a digital-to-analog converter, DAC, wherein the threshold set point comprises in a first operation mode of the protection apparatus a fixed threshold comprising in a second operation mode of the protection apparatus a moving threshold.

In a further possible embodiment of the protection apparatus according to the first aspect of the present invention, the protection apparatus further comprises a load current sensor component connected in series with the at least one semiconductor power switch in the power supply path, wherein the load current sensor component is adapted to measure continuously the load current, I_{L}, flowing through the at least one semiconductor power switch in the power supply path to the connected electrical load, wherein the measured load current, I_{L}, is notified by the load current sensor component to the microprocessor of the control unit, CU, to determine a momentary load state of the electrical load connected to the output terminal of the respective power supply path.

In a further possible embodiment of the protection apparatus according to the first aspect of the present invention, the protection apparatus further comprises a current rise speed sensor component, in particular a coil, connected in series with the at least one semiconductor power switch and the load current sensor component and adapted to generate a voltage drop corresponding to the current rise speed of the load current, I_{L}, flowing from the input terminal via the current rise speed sensor component and the at least one semiconductor power switch and the load current sensor component along the power supply path to the respective output terminal of the power supply path,
wherein the driver circuit of the protection apparatus is adapted to detect an occurring overcurrent depending on the voltage drop generated by the current rise speed sensor component and a voltage drop along the at least one semiconductor power switch applied directly as a sum voltage to a driver input at the high voltage side of the driver circuit and to switch off said at least one semiconductor power switch automatically upon detection of an overcurrent within a switch-off period of less than 1 msec to provide protection against overcurrent, wherein the switch-off period of less than 1 msec is defined by signal propagation delays along a control path including a connection circuitry which connects the current rise speed sensor component with the driver input at the high voltage side of the driver circuit and an internal circuitry within the high voltage side of the driver circuit.

In a further possible embodiment of the protection apparatus according to the first aspect of the present invention, the protection apparatus comprises
a first overvoltage detection circuit, ODC1, which is connected to the input terminal of the associated power supply path and is adapted to determine a momentary voltage state at the input terminal and further comprises
a second overvoltage detection circuit, ODC2, connected to the output terminal of the associated power supply path and adapted to determine a momentary voltage state at the output terminal.

In a further possible embodiment of the protection apparatus according to the first aspect of the present invention, the momentary voltage state at the input terminal determined by the first overvoltage detection circuit, ODC1, and the momentary voltage state at the output terminal determined by the second overvoltage detection circuit, ODC2, are processed to determine a momentary overall voltage state at both terminals of the associated power supply path which is logically combined by a logic gate to trigger the driver circuit of the protection apparatus to switch off the at least one semiconductor power switch of the associated power supply path automatically if an overall overvoltage state at both terminals of the associated power supply path has been detected.

In a further possible embodiment of the protection apparatus according to the first aspect of the present invention, the current rise speed sensor component, the at least one semiconductor power switch and the load current sensor component are connected in series along the power supply path and form a secondary current path provided between the input terminal and the output terminal of the protection apparatus, wherein a primary current path including a controllable mechanical switch is provided between the input terminal and the output terminal connected in parallel to the secondary current path.

The invention further provides according to a further aspect a method for providing protection of an electrical load against overvoltage having the features of claim 19.

The invention provides according to the second aspect a method for providing protection of an electrical load against overvoltage,
wherein the method comprises the steps of:
detecting an overvoltage at a power supply path including at least one semiconductor power switch, wherein the power supply path supplies the load current to a connected electrical load;
applying a control signal along a control path to a driver input of a driver circuit to trigger a switch-off of the at least one semiconductor power switch of the power supply path within a short switch-off period defined by control signal propagation delays along a control path and by propagation delays along an internal circuitry of the driver circuit.

In the following, possible embodiment of the different aspects of the present invention are described in more detail with reference to the enclosed figures.
- Fig. 1: shows a block diagram for illustrating a possible exemplary embodiment of a protection apparatus according to the first aspect of the present invention;
- Fig. 2: shows a further block diagram for illustrating a further possible exemplary embodiment of a protection apparatus according to the first aspect of the present invention;
- Fig. 3: shows a further block diagram for illustrating a possible exemplary embodiment of a protection apparatus according to the first aspect of the present invention;
- Fig. 4: shows a circuit diagram for illustrating a possible exemplary embodiment of a protection apparatus according to the first aspect of the present invention;
- Fig. 5: shows a further block diagram for illustrating a possible exemplary embodiment of a protection apparatus according to the first aspect of the present invention;
- Figs. 6A to 6D: illustrate possible implementations of power supply paths within a protection apparatus according to the first aspect of the present invention;
- Fig. 7: shows a flowchart for illustrating a possible exemplary embodiment of a method for providing protection of an electrical load against overvoltage according to a further aspect of the present invention,;
- Fig. 8: shows a circuit diagram of an internal circuitry of possible implementations of a driver circuit of a protection apparatus according to the present invention;
- Fig. 9: shows a connection circuitry at a high voltage side of the driver circuit in the embodiment of Fig. 2 in more detail;
- Figs. 10, 11: show signal diagrams to illustrate the operation of a protection apparatus.

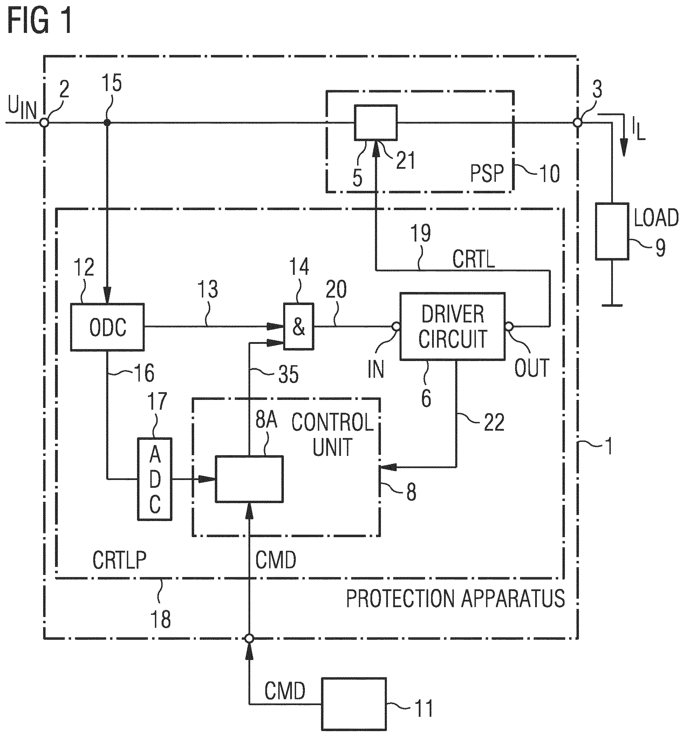

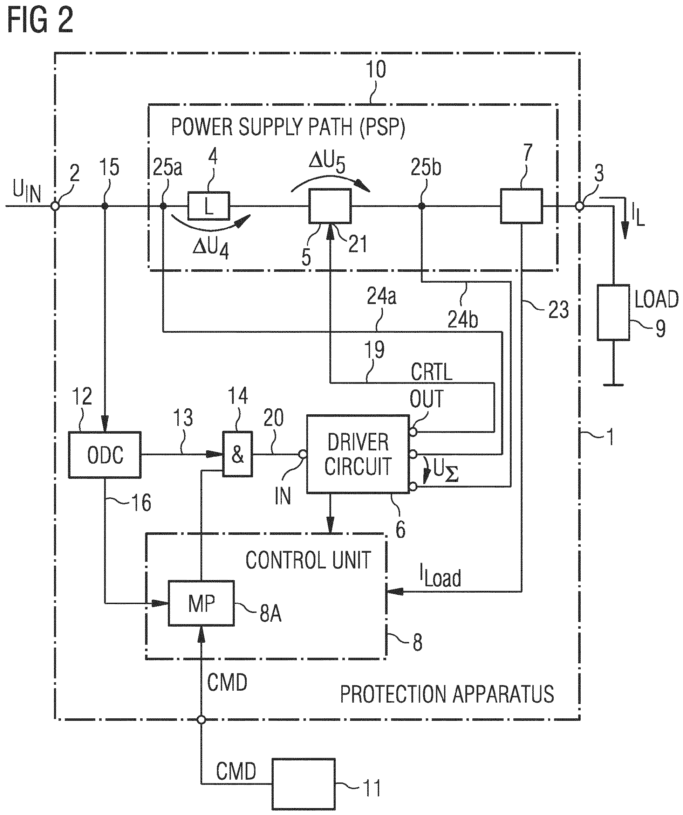

As can be seen from the block diagram of Fig. 1, a protection apparatus 1 is provided for protection of an electrical load 9 connected to an output terminal 3 of the protection apparatus 1. The protection apparatus 1 comprises at least one input terminal 2 adapted to receive power supply voltage U_{IN}. This power supply voltage can comprise an AC power supply voltage U_{AC} from a power supply network PSN. The protection apparatus 1 further comprises at least one output terminal 3 as illustrated in Fig. 1. The input terminal 2 and the output terminal 3 are connected to each other via a power supply path 10 as shown in Fig. 1 comprising at least one semiconductor power switch 5. The at least one semiconductor power switch 5 can be connected in series with further components as also illustrated in Fig. 2. The load 9 receives a load current I_{L} from the output terminal 3 of the power supply path 10. The power supply voltage U_{IN} applied to the input terminal 2 can comprise in a possible embodiment also a DC supply voltage.

The protection apparatus 1 further comprises a control unit 8 comprising a processor 8A adapted to control a driver circuit 6 of the protection apparatus 1 to switch the at least one semiconductor power switch 5 provided within the power supply path 10 either on or off in response to a received switch command CMD. The switch command CMD can be received by the protection apparatus 1 in a possible implementation from an entity 11 which may comprise a user interface or a remote system level controller. In response to the received command CMD, the microprocessor 8A of the control unit 8 can trigger an automatic switch-on or an automatic switch-off of the at least one semiconductor power switch 5 within the power supply path 10 via the associated driver circuit 6.

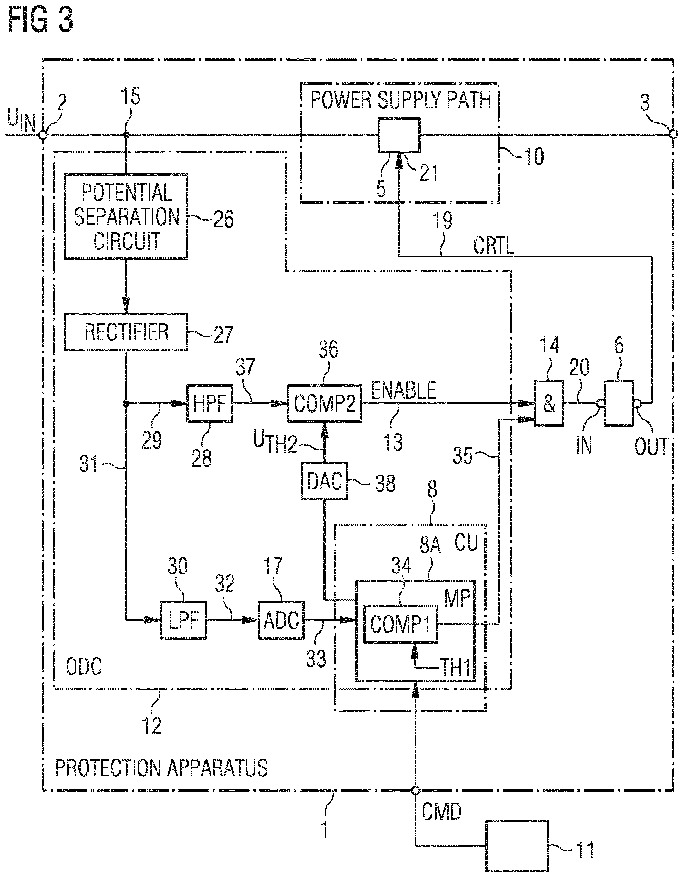

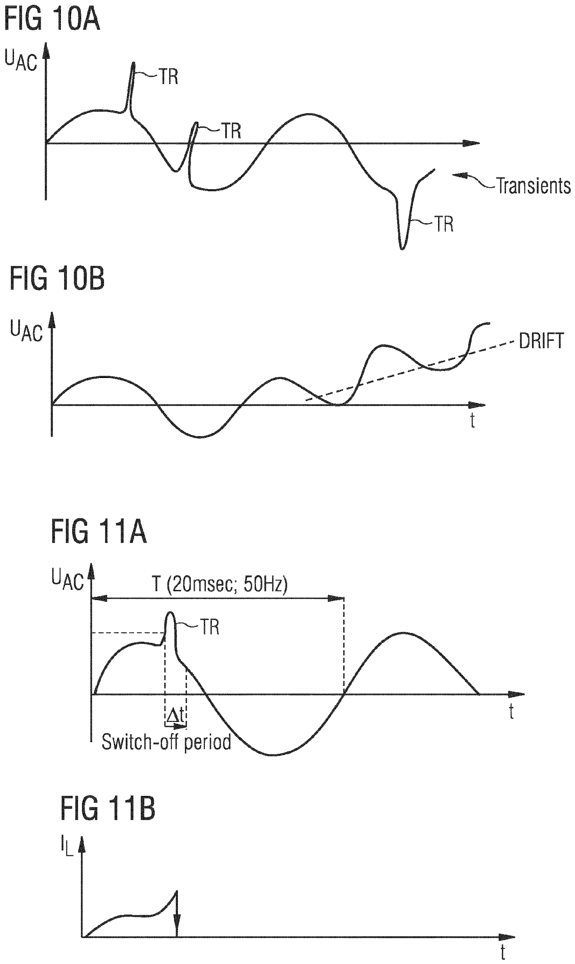

The protection apparatus 1 according to the first aspect of the present invention comprises in the illustrated embodiment at least one overvoltage detection circuit (ODC) 12 connected to the associated power supply path 10 as shown in Fig. 1. The overvoltage detection circuit 12 is adapted to detect an overvoltage state at the associated power supply path 10 and can control the driver circuit 6 directly through a control line 13 which is connected via an AND gate 14 to a driver input IN at the low voltage side 6A of the driver circuit 6. The overvoltage detection circuit 12 can supply via the control line 13 an enable control signal applied to an input of the AND gate 14. This is also illustrated in more detail in Fig. 3. The overvoltage detection circuit 12 can control the driver circuit 6 directly through the control line 13 to trigger a switch-off of the semiconductor power switch 5 by the driver circuit 6 if an overvoltage state has been detected by the overvoltage detection circuit 12 to provide protection of the load 9 against overvoltage. In the illustrated embodiment of Fig. 1, the overvoltage detection circuit 12 is connected at a node 15 to the power supply path 10 to detect an overvoltage state at the input side of the power supply path 10. In an alternative embodiment, the overvoltage detection circuit 12 can also be connected to the output side of the power supply path 10, i.e. to a node connected to the output terminal 3 of the protection apparatus 1 to detect an overvoltage state at the output side of the protection apparatus 1. The overvoltage detection circuit 12 as shown in Fig. 1 is further connected via signal lines 16 to an analog-to-digital converter (ADC) 17 connected at its output side to an input of a control unit 8 as shown in Fig. 1. A first output of the overvoltage detection circuit (ODC) 12 connected via the signal line 13 to the AND gate 14 indicates detected high-frequency transients TR within the signal along the power supply path 10 as also illustrated in Fig. 10A. Another output of the overvoltage detection circuit 12 provides information about slow voltage drifts (illustrated in Fig. 10B) within the signal applied via the power supply path 10 to the output terminal 3 of the protection apparatus 1. The overvoltage detection circuit 12 and the AND gate 14 and the driver circuit 6 as well as the analog-to-digital converter 17 and the control unit 8 form together a control path 18 associated with the power supply path 10 as shown in Fig. 1.

The overvoltage detection circuit 12 connected with the associated power supply path 10 is adapted to detect an overvoltage at the respective power supply path 10 and to control the driver circuit 6 directly through a control line 20 between the AND gate 14 to the driver input IN at a low voltage side 6A of the driver circuit 6 to trigger a switch-off of the at least one semiconductor power switch 5 provided within the associated power supply path 10 if an overvoltage state has been detected by the overvoltage detection circuit 12 to provide protection for the load 9 against occurring overvoltages.

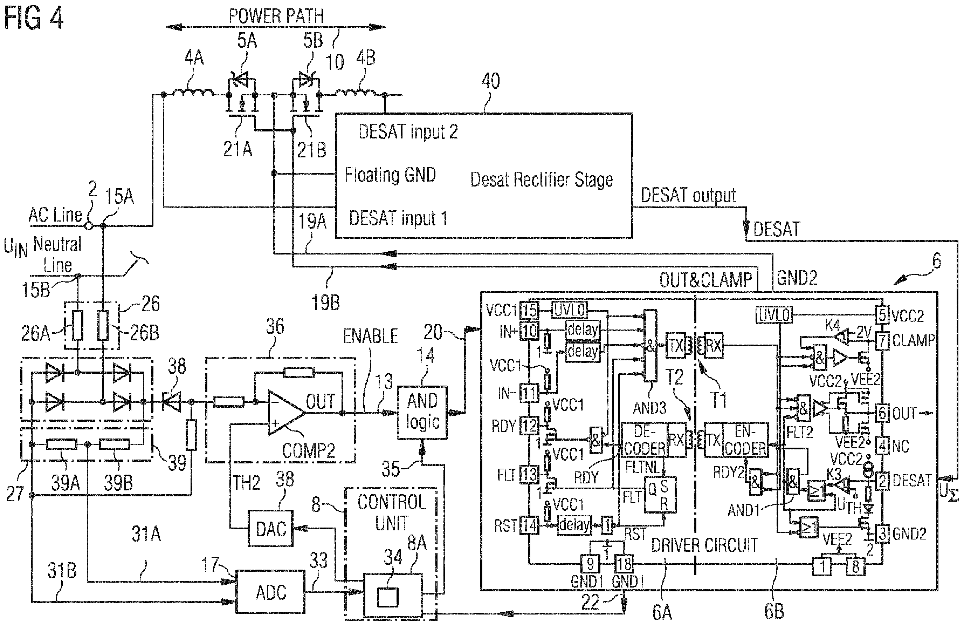

The at least one semiconductor power switch 5 provided in the power supply path 10 can comprise in a possible embodiment a power MOSFET, in particular N-MOSFET. In an alternative embodiment, the semiconductor power switch 5 can also comprise an IGBT. The at least one semiconductor power switch 5 has a blocking voltage which exceeds the normal operation voltage of the received AC power supply voltage U_{AC} applied to the input terminal 2 of the protection apparatus 1. A control gate 21 of the at least one semiconductor power switch 5 is connected directly to a driver output OUT of the driver circuit 6 at the high voltage side 6B of the driver circuit 6. The driver circuit 6 is adapted to switch off the at least one semiconductor power switch 5 via a control line 19 in a preferred embodiment within a switch-off period of less than 1 msec defined by the signal propagation delays along the first control line 13, the control line 20 between the output of the AND gate 14 and the driver input IN as well as propagation delays of the signal along the internal circuitry of the driver circuit 6. The signal propagation delay within the internal circuitry of the driver circuit 6 between the driver input IN and the driver output OUT is in a possible embodiment less than 200 nsec. Depending on the implementation of the overvoltage detection circuit 12, a very short switch-off period can be achieved. The switch-off period can be as low as 1 psec in a possible implementation. In any case, a short switch-off period of less than 1 msec is provided as defined by the propagation delays along the control lines starting from the node 15 and ending at the control gate 21 of the power switch 5 as shown in Fig. 1. Accordingly, the signal propagation delays between node 15 at the control gate 21 of the at least one semiconductor power switch 5 within the power supply path 10 define the switch-off period to switch off the semiconductor power switch 5 in response to an occurring overvoltage. Since the propagation delay along the driver circuit 6 is very low and comprises less than 200 nsec, a very short switch-off period of 1 psec can be achieved in a possible implementation. Even when using relatively slow circuitry in the overvoltage detection circuit 12, still a very low switch-off period of less than 1 msec can be achieved using the driver circuit 6. In a possible implementation, a driver circuit 1 ED020/12-B2 manufactured by Infineon Technologies can be used. This driver circuit comprises two separated circuit halves which are galvanically separated from each other by transformers T1, T2, as also illustrated in Fig. 4. The driver circuit 6 comprises a low voltage side 6A and a high voltage side 6B. The driver input IN provided at the low voltage side receives signals from the overvoltage detection circuit 12 and from the control unit 8 via the AND gate 14. The driver output OUT of the driver circuit 6 provided at the high voltage side 6B connects the driver circuit 6 directly to the control input 21 of the controllable power switch 5.

In the illustrated embodiment of Fig. 1, the logical signal generated by a digital comparator COMP1 implemented in the microprocessor 8A of the control unit 8 and a logic enable signal generated by an analog comparator COMP2 of the overvoltage detection circuit 12 are logically combined by the AND gate 14 to provide a logical voltage state signal indicating a detected momentary voltage state at the power supply path 10. The logical voltage state signal is applied by the control line 20 to the driver input IN at the low voltage side 6A of the driver circuit 6. In a possible embodiment, the driver circuit 6 is further adapted to supply a supervision signal to the microprocessor 8A of the control unit 8 adapted to inform the microprocessor 8A about a current operation state of the driver circuit 6 itself and/or about a current switching state of the at least one power switch 5 provided within the power supply path 10. In the illustrated implementation of Fig. 1, the driver circuit 6 provides the supervision signal to the microprocessor 8A of the control unit 8 via a signal line 22.

Fig. 2 shows a block diagram of a further possible embodiment of a protection apparatus 1 according to the present invention. In the illustrated embodiment of Fig. 2, the power supply path 10 between the input terminal 2 and the output terminal 3 comprises additional components, in particular a current rise speed sensor component 4 and a load current sensor component 7. The current rise speed sensor component 4 can be formed by a coil. The load current sensor component 7 is connected in series with the at least one power switch 5 of the power supply path 10 as shown in Fig. 2. The load current sensor component 7 is adapted to measure continuously the load current I_{L} flowing through the at least one semiconductor power switch 5 in the power supply path 10 of the electrical load 9 connected to the output terminal 3. The measured load current I_{L} is notified by the load current sensor component 7 to the microprocessor 8A of the control unit 8 via a signal line 23 as shown in Fig. 2. The microprocessor 8A of the control unit 8 is adapted to determine a momentary load state of the electrical load 9 connected to the output terminal 3 of the power supply path 10 on the basis of the measured load current I_{L} received via the signal line 23. The current measurement unit 7 can be implemented by a Hall sensor. In a further alternative embodiment, the load current sensor component 7 can also comprise a GMR sensor. In a still further alternative embodiment, the load current sensor component 7 can also be formed by a transformer connected via an analog-to-digital converter to an input of the control unit 8. Accordingly, the load current sensor component 7 of the protection apparatus 1 can comprise a Hall sensor, a GMR sensor, a shunt resistor or a transformer adapted to measure continuously the load current I_{L} flowing to the output terminal 3 of the power supply path 10 notified to the control unit 8. The continuously measured load current I_{L} can provide a load current profile which can be stored in a possible implementation in a data memory of the control unit 8.

The power supply path 10 can comprise in a possible implementation further components such as a relay which may be controlled directly by the microprocessor 8A of the control unit 8. Such a mechanical switch provided in the power supply path 10 can provide additional security in case that a switch-off of the semiconductor power switch 5 fails. In a possible embodiment, an electromechanical relay can be connected in series with the at least one semiconductor power switch 5 to interrupt the current flow if an overload state of the electrical load 9 has been determined by the microprocessor 8A of the control unit 8. The load current I_{L} measured by the load current sensor component 7 can in a possible embodiment be converted by an analog-to-digital converter into digital measurement values stored in the data memory of the control unit 8.

As can be seen in Fig. 2, a current rise speed sensor component 4 which can be formed by a coil is connected in series with the at least one semiconductor power switch 5 and the load current sensor component 7 within the power supply path 10. The current rise speed sensor component 4 is adapted to generate a voltage drop ΔU₄ corresponding to the current rise speed of the load current I_{L} flowing through the power supply path 10. Further, there is a voltage drop ΔU₅ along the semiconductor power switch 5 as shown in Fig. 2, e.g. the Drain-Source-Voltage U_{DS} along a MOSFET 5. The generated voltage drop ΔU₄ and the voltage drop ΔU₅ along the semiconductor power switch 5 are applied directly as a sum voltage U_{∑} to a driver input DESAT at a high voltage side 6B of the driver circuit 6 as shown in Fig. 2. The applied sum voltage U_{∑} can trigger an automatic switch-off of the at least one semiconductor power switch 5 upon detection of an overcurrent flowing through the power supply path 10 within a switch-off period of less than one 1 msec to provide also protection against overcurrent. Accordingly, the protection apparatus 1 as illustrated in the embodiment of Fig. 2 is provided to provide protection against overvoltage and also against overcurrent. The switch-off period of less than 1 msec to provide protection against overcurrent is defined by the signal propagation delays along another control loop including a connection circuitry which connects the current rise speed sensor component 4 along the signal lines 24A, 24B with the driver input DESAT at the high voltage side 6B of the driver circuit 6 and an internal circuitry at the high voltage side 6B of the driver circuit 6. The signal propagation delays caused by the internal circuitry in the high voltage side 6B are even lower than the propagation delays from the driver input IN at the low voltage side 6A to the driver output OUT at the high voltage side 6B. Accordingly, the signal propagation delay caused by the internal circuitry at the high voltage side 6B between the DESAT input and the driver output OUT is less than 200 nsec. The sum voltage U_{∑} corresponds to the voltage drop between nodes 25A, 25B within the power supply path 10 as shown in Fig. 2 connected via signal lines 24A, 24B to inputs at the high voltage side 6B of the driver circuit 6.

Fig. 3 shows a further block diagram for illustrating a possible embodiment of the protection apparatus 1 according to the first aspect of the present invention. Fig. 3 shows a possible exemplary implementation of the overvoltage detection circuit (ODC) 12 within the protection apparatus 1 in more detail. The overvoltage detection circuit 12 is associated with the power supply path 10 and is adapted to detect an overvoltage within the power supply path 10. In the illustrated embodiment of Fig. 3, the overvoltage detection circuit 12 is connected at its input side at a node 15 with the power supply path 10. The overvoltage detection circuit 12 comprises in the illustrated embodiment a potential separation circuit 26 adapted to provide potential separation between the power supply path 10 and the other circuitry of the overvoltage detection circuit 12. The potential separation circuit 26 provides a potential separation between a high voltage side, i.e. the power supply path 10, and a low voltage side comprising the circuitry of the overvoltage detection circuit 12. At the high voltage side, there can be high voltages of more than 400 Volts (up to 1500 Volts) depending on the use case. At the low voltage side, a typical supply voltage for the control circuitry varies between 5 to 24 Volt DC. The overvoltage detection circuit 12 comprises a rectifier 27 adapted to rectify the electrical voltage received via the potential separation circuit 26. The rectifier 27 can comprise for instance a bridge rectifier as also illustrated in Fig. 4. In the illustrated embodiment of Fig. 3, the overvoltage detection circuit 12 comprises an analog high-pass filter (HPF) 28 adapted to perform a high-pass filtering of the rectified voltage output by the rectifier 27. The high-pass filter 28 is connected via the signal line 29 to the output of the rectifier 27 as shown in Fig. 3. In the illustrated embodiment of Fig. 3, the overvoltage detection circuit 12 can further comprise a low-pass filter (LPF) 30 connected to the output of the rectifier 27 via signal line 31. The low-pass filter 30 is adapted to perform low-pass filtering of the rectified voltage output by the rectifier 27. The output of the low-pass filter 30 is connected via a signal line 32 to the analog-to-digital converter (ADC) 17 converting a low-pass filtered signal into digital samples applied via a signal line 33 to a digital comparator 34 implemented in the microprocessor 8A of the control unit 8. The analog-to-digital converter 17 is adapted to convert the low-pass filtered signal received from the low-pass filter 30 into a digital signal or samples applied to the digital comparator 34 implemented in the microprocessor 8A of the control unit 8. The digital comparator 34 implemented in the microprocessor 8A is adapted to compare the low-passed filtered digital signal output by the analog-to-digital converter 17 with a first adjustable digital threshold value TH1 to detect a low-frequency drift of the electrical voltage at the power supply path 10 as also illustrated in Fig. 10B. The digital comparator COMP1 34 is adapted to generate a high logic signal if a low-frequency drift is detected wherein the high logic signal is supplied via the signal line 35 to an input of the AND gate 14 as shown in Fig. 3.

The overvoltage detection circuit 12 as shown in Fig. 3 further comprises a fast analog comparator COMP2 36 connected to the output of the high-pass filter 28 via signal line 37. In a possible implementation, the analog comparator COMP2 36 can be formed by a Schmitt trigger circuit as also illustrated in the implementation of Fig. 4. The analog comparator 36 is adapted to compare the rectified voltage output by the rectifier 27 having been high-pass filtered by the high-pass filter (HPF) 28 with a threshold set point TH2 to detect overvoltage transients TR in the electrical voltage at the power supply path 10 as also illustrated in Fig. 10A. The analog comparator 36 is adapted to generate a logic enable signal applied via control line 13 to an input of the AND gate 14 as shown in Fig. 3. The generated logic enable signal is provided to enable a switch-off of the at least one semiconductor power switch 5 provided within the associated power supply path 10 by the driver circuit 6 if an overvoltage transient TR has been detected by the analog comparator 36. In the embodiment shown in Fig. 3, the threshold set point of the analog comparator COMP2 36 of the overvoltage detection circuit 12 can be set by the microprocessor 8A of the control unit 8 via a digital-to-analog converter DAC 38. The threshold set point TH2 can comprise in a first operation mode of the protection apparatus 1 a fixed threshold. Further, the threshold set point TH2 can comprise in a second operation mode of the protection apparatus 1 also a moving threshold.

The overvoltage detection circuit 12 illustrated in the embodiment of Fig. 3 comprises an analog high-pass filter (HPF) 28 and an analog low-pass filter (LPF) 30. A provision of the analog high-pass filter 28 and of the analog low-pass filter 30 is optional. Accordingly, in alternative embodiments, the overvoltage detection circuit 12 may dispense with the high-pass filter (HPF) 28 and with the low-pass filter (LPF) 30. The analog-to-digital converter (ADC) 17 and the digital-to-analog converter (DAC) 38 can in a possible implementation also be integrated in the control unit 8. The sampling rate of the ADC 17 and the conversion rate of the DAC 38 can be controlled by the microprocessor 8A.

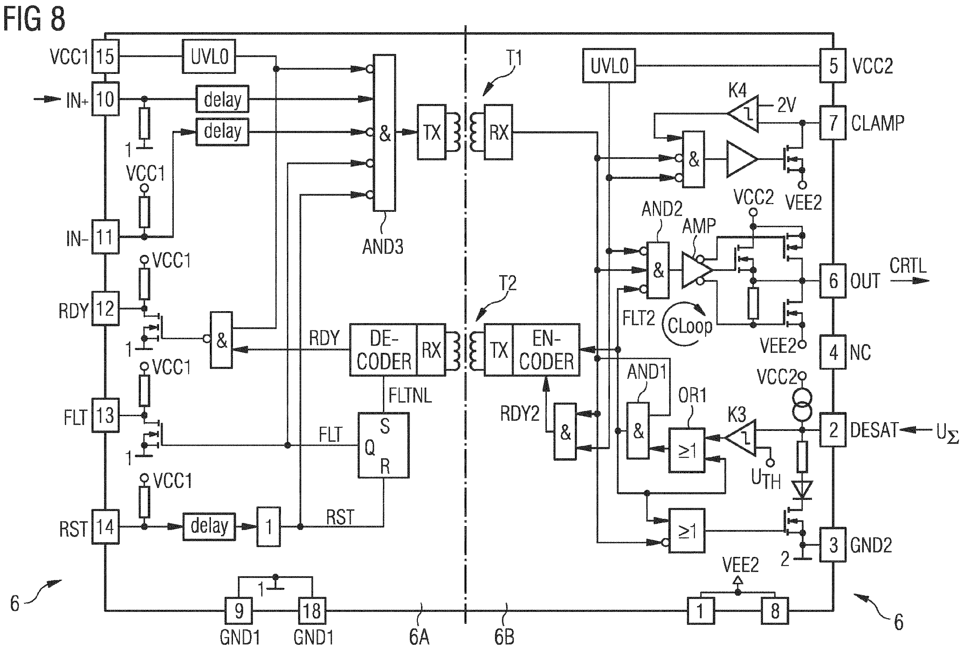

Fig. 4 shows a circuit diagram for illustrating a possible exemplary embodiment of a protection apparatus 1 according to the first aspect of the present invention. Fig. 4 and Fig. 8 show the driver circuit 6 in more detail. As shown in Fig. 8, the driver circuit 6 comprises a low voltage side 6A and a high voltage side 6B separated by transformers T1, T2.

The overvoltage detection circuit 12 is connected at nodes 15A, 15B to a AC line connected to the power supply path 10 and to a neutral line N. The overvoltage detection circuit (ODC) 12 comprises at its input side in the illustrated embodiment a potential separation circuit 26 which is implemented by two resistors 26A, 26B having a high resistance of more than 1 megaohm. This high resistance provides for a potential separation of the input of the overvoltage detection circuit 12 from the high voltage power supply path. The high resistance of the resistors 26A, 26B provides for a high impedance coupling to input terminal 2 which can be connected to an AC grid or power supply network PSN to avoid any excess current flows into the circuitry of the overvoltage detection circuit 12. The input terminal 2 may be connected to a DC power supply source in an alternative embodiment. In an alternative implementation, the potential separation circuit 26 may be implemented by other means, for instance by an inductive coupling. The rectifier 27 is implemented in the illustrated embodiment as a bridge rectifier comprising four diodes D. The bridge rectifier 27 is adapted to rectify the electrical voltage received from the potential separation circuit 26 to provide a rectified output voltage. The analog comparator COMP2 36 is implemented in the illustrated embodiment by a Schmitt trigger circuit. In the illustrated implementation, the inverting input (-) of the operational amplifier of the Schmitt trigger circuit is connected via a Z-diode 38 to the bridge rectifier circuit 27. The Z-diode 38 provides more robustness against false triggering of the analog comparator COMP2 36 compared to a mere resistive coupling. The Schmitt trigger comparator 36 comprises a hysteresis.

The output voltage provided by the bridge rectifier 27 can be supplied via a signal conditioning circuitry 39 consisting of two resistors 39A, 39B via signal lines 31A, 31B to the input of the analog-to-digital converter (ADC) 17. The logic signals carried via the signal lines 31A, 31B provide information about a signal amplitude at the AC line connected to the input terminal 2 of the protection apparatus 1. The analog-to-digital converter 17 converts the received signal into digital samples applied via the signal line 33 to the digital comparator 34 implemented in the microprocessor 8A of the control unit 8. The digital comparator 34 is adapted to compare the converted digital samples with a first adjustable digital threshold value TH1 to detect a low-frequency drift of the electrical voltage at the AC line connected to the input terminal 2 of the protection apparatus 1. The digital comparator 34 provides a high voltage signal if a low-frequency drift is detected and the high logic signal is applied via signal line 35 to an input of the AND gate 14. An advantage of the implementation shown in Fig. 4 is that the comparator 34 can be implemented in the microcontroller 8A of the control unit 8 and can be controlled directly by a control program executed by the microprocessor 8A. Accordingly, the thresholds can be set in this control path by a software control program.

Further, the threshold set point of the analog comparator, e.g. the Schmitt trigger 36, is set in the illustrated implementation by the microprocessor 8A of the control unit 8 via the digital-to-analog converter (DAC) 38 as shown in Fig. 4. In a first operation mode of the protection apparatus 1, a fixed threshold is set. In this operation mode, the analog comparator COMP2 36 is triggered only depending on an absolute amplitude (superposition of 50 Hz and overvoltage peak).

In a second operation mode of the protection apparatus 1, a moving threshold is set. In this second operation mode, a signal-to-noise ratio SNR can be increased during normal operation of the protection apparatus 1. The comparator set point can be reduced while a 50 Hz signal is high and can be increased if a 50 Hz AC signal is low.

The analog fast Schmitt trigger comparator COMP2 36 provides in the illustrated implementation a high logic signal if the AC voltage U_{AC} is in an admissible range and applies this high logic signal via the signal line 13 to the first input of the AND gate 14. In contrast, if the AC voltage U_{AC} is too high and an overvoltage is present, the analog comparator 36 provides a low logic signal applied via the signal line 13 to the first input of the AND gate 14. Accordingly, the output signal of the analog comparator COMP2 36 (Schmitt trigger) provides an enable signal enabling the logical control signal travelling from the microprocessor 8A via the second input of the AND gate 14 to the driver input IN at the low voltage side 6A of the driver circuit 6. The control unit 8 can receive a switch-on or a switch-off command CMD from the entity 11, i.e. from a user interface or from a system level controller. If the received command CMD is an ON command, a high logic signal is supplied via the control line 35 to the second input of the AND gate 14. This high logic signal can only travel to the output of the AND gate 14 and can be supplied via the signal line 20 to the driver input IN if the enable signal ENABLE provided by the analog comparator 36 is high. Accordingly, if there are high-frequency transients TR on the AC line of the power supply path 10, the ENABLE-signal is low and blocks the AND gate 14 such that the non-inverting input IN+ at the low voltage side 6A of the driver circuit 6 does not receive a high logical signal, even if a logic high switch-on command is output by the control unit 8 via line 35. A user controllable switch-on, switch-off signal is applied by the microprocessor 8A via the signal line 35 to the second input of the AND gate 14. If a high logical signal is applied to both signal inputs of the AND gate 14, a high level control signal is applied to the driver input IN at the low voltage side 6A of the driver circuit 6. The driver circuit 6 can be provided by a driver circuit chip having pins on the low voltage side 6A and pins on the high voltage side 6B. The signal transfer across the galvanic isolation is implemented by transformers T1, T2 providing an inductive coupling between the low voltage side 6A and the high voltage side 6B of the driver circuit 6. In the embodiment illustrated in Fig. 4, the signal line 20 connects the output of the AND gate 14 with a non-inverting driver input IN+ of the driver circuit 6. In a possible implementation, the driver circuit 6 further comprises an inverting driver input.

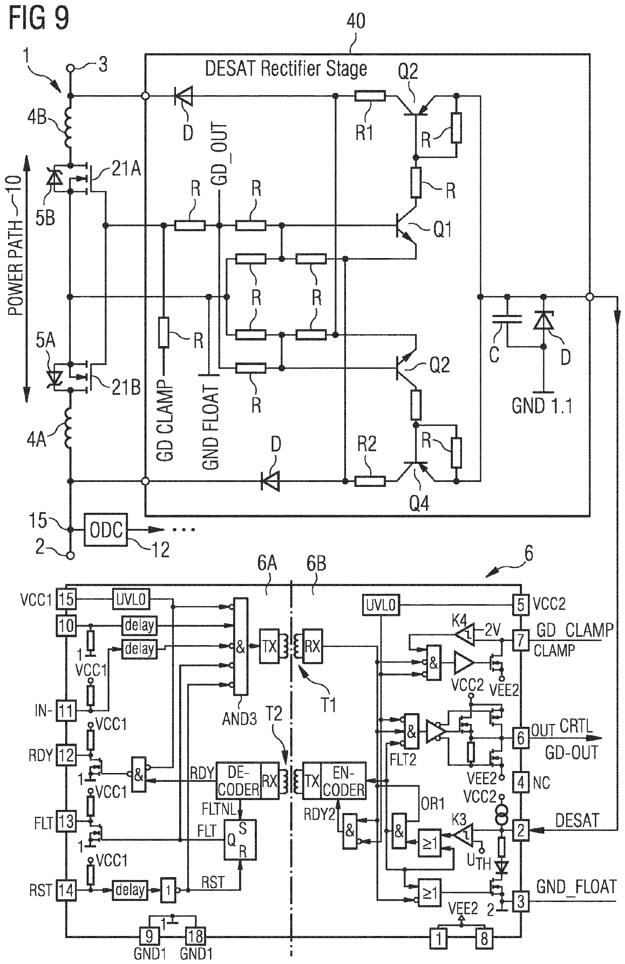

The driver circuit 6 illustrated in Fig. 4 can comprise an IED020112-B2 driver circuit produced by Infineon Technologies as shown in Fig. 8. The driver circuit 6 consists of two galvanically separated parts. The low voltage side 6A is connected to the overvoltage detection circuitry and to the microprocessor 8A of the control unit 8. The output side 6B of the driver circuit 6 is connected to the high voltage power supply path 10. The driver output OUT at the high voltage side 6B can use integrated MOSFETs to provide a rail-to-rail output signal. The driver output OUT is connected directly via signal lines 15A, 15B to the control gate 21A, 21B of the semiconductor power switches 5A, 5B as shown in Fig. 4. The semiconductor power switches 5A, 5B are in the illustrated implementation power N-MOSFETs. The power MOSFETs 5A, 5B are connected in the illustrated embodiment in series to associated current rise speed sensor components 4A, 4B implemented as coils. These coils 4A, 4B are provided to generate sensor signals to provide overcurrent protection. The semiconductor power switches 5A, 5B as well as the current rise speed sensor components 4A, 4B are provided within the power supply path 10 connecting the input terminal 2 with the output terminal 3. The coils 4A, 4B can be connected via a rectifier stage 40 (shown in more detail in Fig. 9) to the DESAT input pin at the high voltage side 6B of the driver circuit 6. The voltage drop ΔU₅ along the semiconductor power switch 5A, 5B corresponds to a drain source voltage U_{DS}. The voltage drop ΔU₅ along the semiconductor power switch 5 and the voltage drop ΔU₄ along the current rise speed sensor component 4, i.e. coil 4, is applied as a sum voltage U_{Σ} to the DESAT driver input of the driver circuit 6. The current rise speed sensor component 4 does not only measure the current rise speed dI/dt but can also provide additional protection of the semiconductor power switch 5 by limiting the voltage drop, i.e. the drain source voltage U_{DS} at the power MOSFET 5. The sum voltage U_{∑} comprises the voltage drop ΔU₄ of the coil 4 having a linear dependency from the current rise speed (dl/dt), plus a voltage drop ΔU₅ along the semiconductor power switch 5 having a non-linear drain source voltage U_{DS}. The driver circuit 6 is adapted to determine based on the received sum voltage U_{∑} an occurring short circuit within the power supply path 10. In a possible embodiment, the driver circuit 6 can switch off the power switch 5 upon detection of an overcurrent within less than 1 psec. The inductivity L of the current rise speed sensor component 4 can be adapted individually to the physical limitations of the used semiconductor power switch 5. The coil 4 is very robust against environmental influences and does not involve any electronic circuitry to generate a sense voltage ΔU₄. Consequently, the probability that the hardware sensor component 4 fails during operation of the protection apparatus 1 is extremely low. In contrast to conventional electronic circuits such as differentiators, the use of the hardware sensor component 4, in particular a coil, makes the protection apparatus 1 robust and increases its operation lifetime. It is of note that the switch-off operation in case of an overcurrent is performed by the analog driver circuit 6 without involving the relative slow control unit 8. Switch-off operations are performed automatically in response to a detected overvoltage. This detection is performed by the overvoltage detection circuit 12. The switch-off operation caused by a detected overvoltage is performed by the driver circuit 6 without involving the slow control unit 8 so that an extremely low switch-off period of less than 1 msec and even in the range of several microseconds can be achieved. Also in case that an overcurrent is detected by means of the voltage drop along the coil 4 and the power switch 5, also a very fast switch-off operation is triggered without involving the slow control unit 8. Accordingly, a switch-off of the at least one power switch 5 in the power supply path 10 can also be achieved in a short switch-off period of less than 1 msec. The current rise speed sensor component 4 is sensitive and generates a sense voltage ΔU₄ even before an electrical current flowing to the load 9 reaches a high current level which potentially can damage components of the connected load 9. A fast switch-off operation provided by the hardware driver circuit 6 in response to a detected overvoltage and/or in response to a detected overcurrent guarantees that only a small portion of the electrical energy is supplied to the connected load 9 in case of an overvoltage and/or in case of an occurred overcurrent.

An applied AC supply voltage U_{AC} applied to the terminal 2 can comprise in a possible implementation a frequency of e.g. 50 to 60 Hz. The current rise speed sensor component 4 can comprise a coil which comprises in a possible implementation an inductivity L of around 1 µH(ΔU₄∼L dI/dt) microhenry. With the protection apparatus 1 according to the present invention, the driver circuit 6 does operate independently from the control unit 8 to switch off the associated semiconductor power switches 5A, 5B within a brief reaction time if an overvoltage or an overcurrent has been detected.

In the embodiment comprising the load current sensor component 7 as illustrated in Fig. 2, the protection apparatus 1 further provides also protection against an overload state. Accordingly, the protection apparatus 1 provides simultaneously different protection mechanisms at the same time using a single driver circuit 6.

For overload protection, a logic signal applied to the driver input IN+ travels through the gates of the low voltage side 6A and is inductively coupled into the high voltage side 6B of the driver circuit 6 and travels along the gates to the driver output OUT of the driver circuit 6. In contrast, for overcurrent protection, the sum voltage U_{∑} is directly injected into the DESAT input pin at the high voltage side 6B and travels through a comparator K3 along gates to the driver output OUT. The threshold voltage of the comparator K3 can be adjustable in a possible implementation. Consequently, it is possible to adjust the sensitivity of the driver circuit 6 with respect to an overcurrent represented by the sum voltage U_{Σ} applied to the DESAT input at the high voltage side 6B of the driver circuit 6. With the protection apparatus 1 comprising an overvoltage detection circuit 12 a voltage at the power supply path 10 is monitored and in case of an overvoltage event, the semiconductor power switch 5 is switched off, i.e. opened, automatically as long as the overvoltage is present. As long as the semiconductor power switch 5 is turned off, the high impedance between source and load 9 keeps the overvoltage apart from the connected load 9. To ensure proper operation, the blocking voltage of the at least one semiconductor power switch 5 is higher than any expected overvoltage at the power supply grid side.

The advantage of the protection apparatus 1 according to the present invention is that it can monitor each phase of a multiple-phase power supply system or power supply network PSN connected to the input terminals 2 individually. Accordingly, if an overvoltage and/or an overcurrent is detected on one of the power supply lines of the power supply network PSN, a switch-off of the semiconductor power switch 5 is triggered to protect the load 9 connected to the output terminals 3 of the protection apparatus 1. The detection response time provided by the protection apparatus 1 is sufficient also to handle high-frequency overvoltage transients TR. The switch-off period in case of transients TR provided by the protection apparatus 1 according to the present invention is in a possible implementation in a range of several microseconds. In any case, the reaction time is less than 1 msec. This can be achieved because the driver circuit 6 comprises a very low propagation delay of less than 200 nsec. Further, a high degree of flexibility is achieved by the digital adjustable turn-off thresholds for each power supply path 10 which can be set in a possible implementation via a user interface connected to the microprocessor 8A of the control unit 8.

The connected load 9 can comprise different kinds of loads, in particular inductive loads such as motors. The load can also comprise resistive loads such as heaters.

The protection apparatus 1 according to the present invention provided between the power supply network PSN and the load 9 is fully controllable and has fast semiconductor power switches 5 connected to the driver output OUT of the driver circuit 6. In case that the voltage at the input terminal 2 of the power supply path 10 exceeds an adjustable threshold value, the semiconductor power switch 5 is automatically switched off with a very small delay time. This delay time is defined by signal propagation delays along the control path between node 15 and the control gate 21 of the semiconductor power switch 5 as also illustrated in Fig. 1. After the at least one semiconductor power switch 5 has been switched off it comprises a very high impedance which suppresses any overcurrent flowing from the power supply network PSN to the connected load 9 if an overvoltage event has been detected. In a possible embodiment, if the overvoltage has been disappeared the at least one semiconductor power switch 5 can be automatically switched on again after a waiting period. With the protection apparatus 1 according to the present invention, the impedance between the source and the load 9 is lifted in case of a detected overvoltage event to provide additional protection for the load 9. The semiconductor power switch 5 can provide in the switched-off state an impedance of more than 1 megaohm protecting the load 9 against overvoltage. The semiconductor power switch 5 provides in the switched-on state a low resistance so that only few dissipation power is generated.

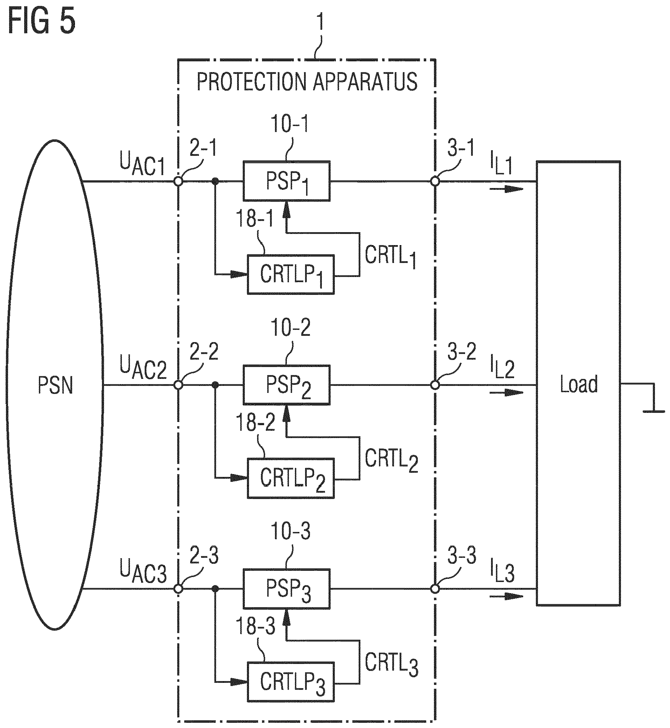

Fig. 5 shows a possible embodiment of a protection apparatus 1 according to the present invention. In the illustrated embodiment, the protection apparatus 1 comprises three parallel power supply paths 10-1, 10-2, 10-3. Each of the power supply paths 10-1, 10-2, 10-3 comprises an associated control path 18-1, 18-2, 18-3 which can be implemented as illustrated in the embodiment of Fig. 1. Accordingly, each power supply path 10-1, 10-2, 10-3 can be protected separately against overcurrent and/or against overvoltage. Each power supply path 10-i can comprise at least one semiconductor power switch 5. Further, the power supply path 10-i can comprise additional components such as a current rise speed sensor component 4 or a load current sensor component 7 connected in series. Each control path 18-1 can comprise a separate overcurrent detection circuit 12. The control unit 8 of the protection apparatus 1 can be provided in a possible implementation for all three control paths 18-1, 18-2, 18-3.

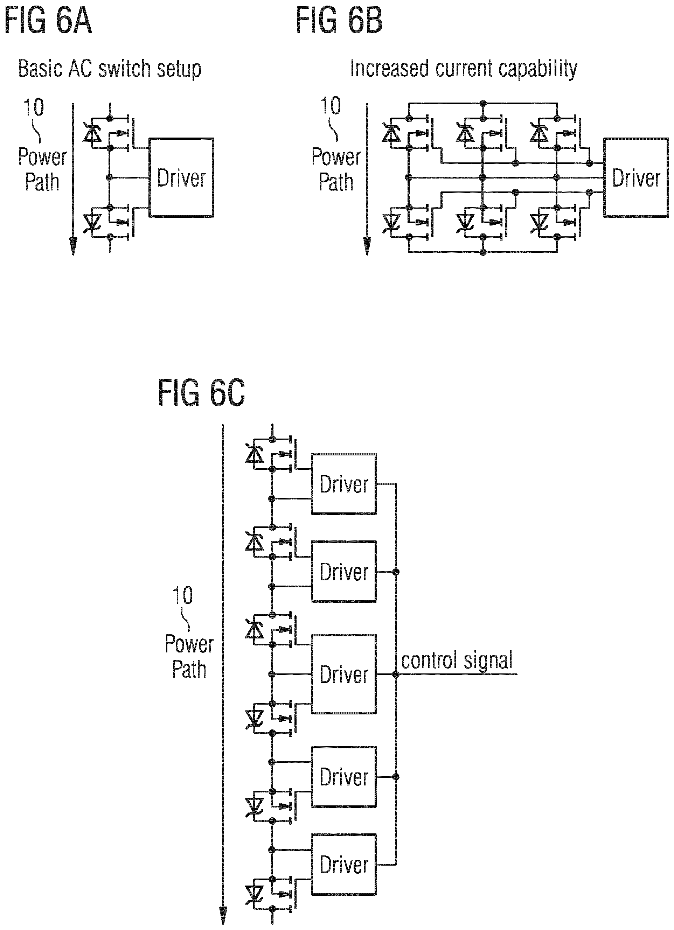

Figs. 6A to 6B illustrate alternative possible implementations for the provision of semiconductor power switches 5 in the power supply path 10. In a preferred embodiment, each power supply path 10 is provided with a pair of N-MOSFETs controlled by a single driver circuit 6 as illustrated in Fig. 6A. The provision of two power MOSFETs connected in series does increase the provided blocking voltage in the power supply path 10 when the two power MOSFETs are switched off by the driver circuit 6. Instead of power MOSFETs, also IGBTs can be used. Further, it is possible to use Sic MOSFETs.

Fig. 6B illustrates the provision of parallel connected power MOSFET pairs within the power supply path 10 controlled by a common driver circuit 6. The implementation illustrated in Fig. 6B provides for increased current capability of the power supply path 10 which may be required depending on the use case.

Fig. 6C illustrates a further possible implementation where several overlapping pairs of semiconductor power switches 5 are controlled by several driver circuits 6-i in response to a control signal output by the AND gate 14 and applied to the driver inputs of the different driver circuits 6 illustrated in Fig. 6C. Because of the high number of serial connected semiconductor power switches 5 as shown in Fig. 6C, the blocking voltage can be increased significantly depending on the use case.

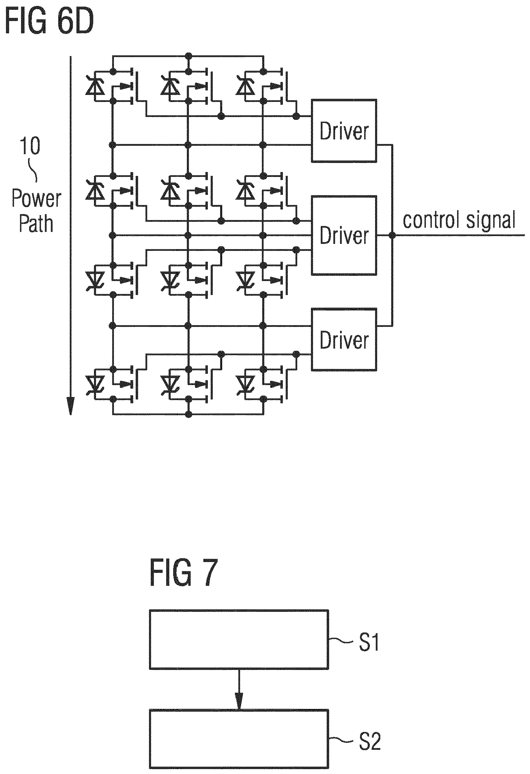

Fig. 6D shows a further possible alternative implementation forming a combination of the embodiment illustrated in Fig. 6B and of the embodiment illustrated in Fig. 6C. In the embodiment shown in Fig. 6D, several power switches 5 are connected in series and several power switches 5 are connected in parallel to be driven by a corresponding driver circuit 6. In the illustrated example of Fig. 6D, six semiconductor power switches 5 are connected in series and three semiconductor power switches 5 are connected in parallel. The embodiment as shown in Fig. 6 provides for an increased blocking voltage and a higher current capability of the power supply path 10 at the same time. The number of semiconductor power switches 5 connected in series and connected in parallel can vary depending on the use case, in particular depending on the supply voltage U_{AC} of the power supply network PSN and depending on the connected loads 9.

Further embodiments of the protection apparatus 1 are possible. In a possible embodiment, the protection apparatus 1 does not only comprise one overvoltage detection circuit (ODC) 12 but two overvoltage detection circuits 12. In this embodiment, a first overvoltage detection circuit (ODC1) 12 can be connected to the input terminal 2 of the associated power supply path 10 and can be adapted to determine a momentary voltage state at the input terminal 2. The second overvoltage detection circuit (ODC2) 12 can be connected to the output terminal 3 of the associated power supply path 10 and can be adapted to determine a momentary voltage state at the output terminal 3. Accordingly, this embodiment has the advantage that it not only monitors the voltage states on the input side but also on the output side of the protection apparatus 1. In this embodiment, the momentary voltage state at the input terminal 2 determined by the first overvoltage detection circuit (ODC1) 12 and the momentary voltage state at the output terminal 2 determined by the second overvoltage detection circuit (ODC2) 12 can be processed to determine a momentary overall voltage state at both terminals, i.e. at the input terminal 2 and at the output terminal 3 of the protection apparatus 1. The momentary voltage state at the input terminal 2 and the momentary voltage state at the output terminal 3 can be combined in a possible implementation logically by a logic gate to trigger the driver circuit 6 of the protection apparatus 1 to switch off the at least one semiconductor power switch 5 of the associated power supply path 10 automatically if an overall overvoltage state of both terminals 2, 3 of the protection apparatus 1 has been detected.

In a further possible embodiment of the protection apparatus according to the first aspect of the present invention, the current rise speed sensor component 4, i.e. a coil, and the at least one semiconductor power switch 5 as well as the load current sensor component 7 which are connected in series along the power supply path 10 do form a secondary current path within the protection apparatus 1 provided between the input terminal 2 and the output terminal 3. In this embodiment, the protection apparatus 1 can comprise an additional primary current path having a controllable mechanical switch such as a Thomson switch provided between the input terminal 2 and the output terminal 3 of the protection apparatus 1 and being connected in parallel to the second current path, i.e. to the power supply path 10 of the protection apparatus 1. In case that the mechanical switch is switched off by a controller during operation, a current flowing through the primary current path is deviated to the parallel secondary current path provided by the power supply path 10 such that the occurrence of an electric arc at the mechanical contact of the mechanical switch is suppressed.

Fig. 7 shows a flowchart to illustrate an exemplary embodiment of a method to provide protection against overvoltage. The method comprises in the illustrated embodiment two main steps.

In a first step S1, an overvoltage at the power supply path 10 is detected by means of an overvoltage detection circuit (ODC) 12 which supplies a control signal via control signal lines 13 at the AND gate 14 and the signal line 20 to the driver input IN at the low voltage side 6A of the driver circuit 6 to trigger automatically a switch-off of the semiconductor power switch 5 in the power supply path 10 in a further step S2. The switch-off of the semiconductor power switch 5 within the power supply path 10 can be performed very fast in a switch-off period of less than 1 msec. This switch-off period is defined by the circuitry of the overvoltage detection circuit 12 and the internal circuitry of the driver circuit 6. The switch-off period of less than 1 msec. as defined by the circuitry between node 15 and the control gate 21 of the at least one semiconductor switch 5 in the control loop illustrated in Fig. 1. Since the driver circuit 6 comprises an internal propagation delay of less than 200 nsec, the switch-off period can in a possible implementation be even lower and may comprise only a few microseconds. This provides for a very effective overvoltage protection of the connected load 9. The overvoltage protection method provides overvoltage protection in particular also against high-frequency transients TR as illustrated in Fig. 10A.

The protection apparatus 1 according to the present invention has the additional advantage that a switch-off of the semiconductor power switch 5 does not require that the received sinusoidal power supply voltage must be at 0 volt to perform a switching-off. The switching-off can be performed at any time independent on the current state of the received sinusoidal AC supply voltage U_{AC}. By using semiconductor power switches 5 and the very fast measurement circuit including the overvoltage detection circuit 12 and the driver circuit 6 it is possible to protect the load 9 efficiently and to increase the operation lifetime of the load 9.

Fig. 8 shows a circuit diagram of a possible exemplary implementation of a driver circuit 6 used by the protection apparatus 1 according to the first aspect of the present invention in more detail. The driver circuit 6 as shown in Fig. 8 can be used to drive an IGBT or a power MOSFET. As can be seen in Fig. 8, the driver circuit 6 consists of two galvanically separated parts. The driver circuit 6 comprises a low voltage side 6A and a high voltage side 6B. The low voltage side 6A comprises a non-inverting input IN+ and an inverting input IN-. The two sides 6A, 6B are separated galvanically and coupled by transformers T1, T2 as shown in Fig. 8. The non-inverting input IN+ on the low voltage side 6A is used to receive the logical output signal from the AND gate 14. The output OUT on the high voltage side 6B is used to control the gates 21 of the semiconductor power switch 5 at the control line 19.

A DESAT input on the high voltage side 6B is used to receive the sum voltage U_{Σ} from the current rise speed sensor component 4 and the voltage drop ΔU₅ along the power switch 5 as illustrated in Fig. 2. The sum voltage U_{∑} at the DESAT input at the high voltage side 6B of the driver circuit 6 can be compared with the threshold voltage U_{TH} at the comparator K3 as illustrated in Fig. 8. If the sum voltage U_{∑} exceeds this configurable threshold voltage U_{TH}, a logic high signal travels along the logic gates in a control loop within the high voltage side 6B to the driver output OUT of the driver circuit 6. The internal propagation delay from the DESAT input to the driver output OUT within the high voltage side 6B of the driver circuit 6 is very low and does not exceed 200 nsec. If the sum voltage U_{∑} exceeds a configurable threshold voltage U_{TH}, the high logical signal travels along an OR gate OR1 and AND gate AND1 and a further AND gate AND2 to an operation amplifier AMP driving the output stage at the driver output OUT. This internal control loop has a propagation delay time of less than 200 nsec.

The logic signal applied to the non-inverting input IN+ of the driver circuit 6 is applied to an AND gate AND3 and coupled by the transformer T1 to the AND gate AND2 on the high voltage side 6B to be output by the driver output OUT on the high voltage side 6B to trigger the switching of the connected semiconductor switch 5. The signal propagation delay between the driver input IN+ and the driver output OUT does also not exceed 200 nsec.

Fig. 9 shows in more detail the circuitry connecting the coils 4A, 4B with the DESAT driver input at the high voltage side 6B of the driver circuit 6. Accordingly, the protection apparatus 1 uses a single driver circuit 6 both for overcurrent detection by processing the sum signal U_{∑} applied to the DESAT input on the output side 6B of the driver circuit 6 and by processing the logical signal applied to the logical driver input IN+ on the low voltage side 6A of the driver circuit 6. Both the signal path from the logic input IN+ to the driver output OUT in the signal path between the DESAT input and the driver output have a low propagation delay of less than 200 nsec. Fig. 9 shows the circuitry connecting the coils 4A, 4B with the DESAT input on the high voltage side 6B of the driver circuit 6 in more detail.

The protection apparatus 1 comprises an input terminal 2 to receive a power supply voltage U_{AC} from a power supply network PSN having for instance a voltage of 400 volt or more. The power supply path 10 comprises pairs of semiconductor power switches 5A, 5B associated with current rise speed sensor components 4, in particular coils. The circuitry is symmetrical for positive current half waves and negative current half waves of the AC current applied to the load 9 via the power supply path 10. Each coil 4A, 4B comprises an associated semiconductor power switch 5A, 5B as shown in Fig. 9. In a possible implementation, both coils 4A, 4B can comprise an inductivity L of less than about 2.2 microhenry. The power switches 5A, 5B can be implemented by power MOSFETs. In the illustrated implementation, diodes can be connected in parallel to each coil 4A, 4B to reduce self-induction. The power switches 5A, 5B are connected to a bridge rectifier circuit comprising in the illustrated implementation two pairs of complementary transistors Q1 to Q4. At the output side of the bridge rectifier circuit, a capacitor C can be provided to provide a predetermined minimal delay. This delay can have an influence on the switch-off period. In a possible implementation, the delay can be adjusted by changing the capacity of the capacitor C thus adjusting the switch-off period to the requirements of the respective use case, for instance in a range between 1 psec and 1 msec. Resistors R1, R2 as shown in Fig. 9 comprise a resistance which can be configured to adjust the sensitivity of the circuitry illustrated in Fig. 9. As can be seen in Fig. 9, the DESAT input at the high voltage side 6B of the driver circuit 6 is connected to the output of the bridge rectifier circuit to receive the sum voltage U_{Σ} of the power switches 5A, 5B and the associated current rise sensor components 4A, 4B. The driver circuit 6 generates control voltages applied to the gates 21A, 21B of the illustrated two semiconductor power switches 5A, 5B as shown in Fig. 4. The driver circuit 6 is adapted to detect an occurring overcurrent, in particular a short circuit current, depending on the voltages generated directly by the sensor components 4A, 4B and to switch off the associated semiconductor power switches 5A, 5B upon detection of a short circuit current flowing through the current path between the input terminal 2 and the output terminal 3 along the power supply path 10 within a short switch-off period of less than 1 msec depending on the configuration and the adjusted capacitance of the capacitor C. A switch-off of even 2 to 5 psec can be achieved. In the illustrated exemplary embodiment of Fig. 9, the driver circuit 6 comprises a single IGBT driver ICIED020/12-B2 manufactured by Infineon Technologies. Other driver circuits 6 can also be used, in particular ASICs.

In a possible implementation, the current rise speed sensor component 4 can also be implemented by another component sensor coil, in particular by a resistor with a corresponding local measurement circuit adapted to generate directly an electrical voltage U corresponding to the current rise speed of the electrical current I flowing through the respective sense resistor. This resistor can comprise an NTC or PTC resistor. In a possible implementation, the resistance of the used resistor 4 can be temperature-dependent. The temperature-dependent resistance of the resistor 4 can be configured individually to the physical limitations of the associated semiconductor power switch 5.

Figs. 10A, 10B illustrate different scenarios for overvoltages which can be detected by an overvoltage detection circuit 12 of the protection apparatus 1 according to the present invention. The applied power supply voltage U_{AC} is sinusoidal and comprises a frequency of e.g. 50 to 60 Hz. In the example shown in Fig. 10A, transients TR can occur in the applied voltage signal which may cause damage to the connected load 9. These high-frequency transients or glitches can be detected reliably by the overvoltage detection circuit 12 by means of the analog comparator 36.

Fig. 10B illustrates a slow drift of the received power supply voltage U_{AC} which may also cause damage to the connected load 9. This load frequency drift can be connected by the overvoltage detection circuit 12 as well by means of the analog-to-digital converter (ADC) 17 and the digital comparator 34 implemented in the microprocessor 8A of the control unit 8.

Accordingly, the overvoltage detection unit 12 of the protection apparatus 1 can handle different kinds of overvoltage scenarios, in particular high-frequency transients TR as shown in Fig. 10A and also low voltage drifts as shown in Fig. 10B.

In the illustrated embodiment of the overvoltage detection circuit 12 as shown in Fig. 4, the overvoltage detection circuit 12 comprises two main paths, i.e. a fast signal path which can be used for detecting transients TR in the received supply voltage and a slower signal path adapted to detect low drifts in the received AC power supply voltage U_{AC}.

The sensitivity of the overvoltage detection circuit 12 can be controlled by setting the threshold values TH1 for the digital comparator 34 in the slow control path and setting the threshold voltage TH2 for the comparator of the Schmitt trigger 36 in the fast control path of the overvoltage detection circuit 12. These threshold values TH1, TH2 are controlled in a possible implementation by a software executed by the microprocessor 8A. In a possible implementation, the overvoltage detection software executed by the microprocessor 8A can also control the sampling rate of the analog-to-digital converter 17. These parameters can be either preset and configured or can also be controlled to some extent by a remote high level controller connected to the control unit 8 of the protection circuit 1. The overvoltage detection software can be stored in a possible implementation in a program storage of the control unit 8. The overvoltage detection software can be customized and adapted to the specific use case, in particular to the amplitude of the power supply voltages U_{AC} and the type of load 9 connected to the output terminal 3 of the protection apparatus 1. The type of the load 9 connected to the output terminal 3 of the protection apparatus 1 can comprise a resistive load, a capacitive load or an inductive load, in particular an AC motor. For the different types of loads, different customized software programs or subroutines can be stored in the storage of the control unit 8 as firmware. In a further implementation, different customized overvoltage detection programs or routines can also be loaded from a database connected to the program storage of the control unit 8 via a data interface. This data interface can be connected via a data network to a remote database or server. For instance, a user may select a basic type of the connected load 9 such as a resistive or an inductive load as well as the amplitude of the supply voltage U_{AC} provided by the power supply network PSN such that an associated fitting overvoltage detection software is loaded or activated to perform the overvoltage detection routine. In this way, a high degree of flexibility is achieved allowing to adapt the overvoltage detection flexibly and fast for different use cases and operation scenarios. In a possible implementation, the protection apparatus 1 comprises a user interface adapted to input basic parameters such as the type of the connected load 9 and the amplitude of the power supply network PSN to select an associated fitting overvoltage detection program or routine to perform the overvoltage detection. These parameters can be set in a possible implementation in a configuration mode of the protection apparatus 1. A user can further adjust the switch-off period depending on the use case, for instance by adjusting the capacitance of the capacitor C within the DESAT rectifier stage 40 shown in Fig. 9. Also, the threshold values of the comparators 34, 36 of the overvoltage detection circuit 12 can be configured. The configuration values can be stored in a configuration memory of the control unit 8.

Figs. 11A, 11B show schematically a switch-off performed by a protection apparatus 1 in case of an observed transient within the received power supply voltage. As can be seen in Fig. 11A, a transient TR may exceed a predefined threshold to trigger an automatic switch-off of the at least one semiconductor power switch 5 within the power supply path 10 such that the load current I_{L} flowing to the load 9 is interrupted as shown in Fig. 11B. The switch-off period Δt between the detection of the transient TR and the switch-off of the load current I_{L} comprises in a preferred embodiment less than 1 msec. The switch-off period shown in Fig. 11A can be as low as a few microseconds. An advantage of the protection apparatus 1 according to the present invention is that the switching off of the power supply path 10 can take place at any time and is not restricted to a switch-off at the zero voltage crossings of the received AC power supply voltage U_{AC}. Further, the switch-off period provided by the overvoltage detection according to the present invention can be extremely short, i.e. even as low as a few microseconds. A very fast switch-off of the load current I_{L} protects the load 9 and increases also its operation lifetime.

The protection apparatus 1 according to the present invention can be integrated into a housing of a device. This device can comprise a protruding electrical contact at the input terminal 2 adapted to be plugged into corresponding slots of a hybrid power busbar of a busbar system. In a possible embodiment, the protection apparatus 1 comprises three input terminals 2-1, 2-2, 2-3 as also illustrated in Fig. 5 and has three corresponding protruding electrical contacts which can be plugged into corresponding slots of a hybrid busbar of a busbar system. In a possible implementation, the protection apparatus 1 can also be integrated into an NH fuse housing.

The protection apparatus 1 can be connected with its input terminal 2 to a busbar of a busbar system either directly or indirectly by means of an adapter device. The load protection apparatus 1 can also be mounted directly or indirectly by means of an adapter to a DIN rail or to a top hat rail or to a conventional busbar.

## Claims

1. A protection apparatus (1) for protection of an electrical load (9),
said protection apparatus (1) comprising:
- at least one input terminal (2) adapted to receive a power supply voltage.
- at least one semiconductor power switch (5) connected in series to the associated input terminal (2) in a power supply path (10) through which the electrical load (9) connected to an output terminal (3) of said power supply path (10) receives an electrical load current, I_{L};
said protection apparatus (1) further comprising:
- a control unit (8) having a microprocessor (8A) adapted to control a driver circuit (6) of said protection apparatus (1) to switch the at least one semiconductor power switch (5) provided in the power supply path (10) on or off in response to a received switch command (CMD),
said protection apparatus (1) further comprising:
at least one overvoltage detection circuit, ODC, (12) connected to an associated power supply path (10) of said protection apparatus (1) and adapted to detect an overvoltage state at the respective power supply path (10) of said protection apparatus (1) and to control the driver circuit (6) directly through control lines (12, 20) connected to a driver input (IN) at a low voltage side (6A) of the driver circuit (6) to switch off the at least one semiconductor power switch (5) provided within the associated power supply path (10) if an overvoltage state has been detected by the overvoltage detection circuit, ODC, (12) to provide protection of the connected electrical load (9) against overvoltage.

2. The protection apparatus (1) according to claim 1 wherein the control unit (8) is connected to a user interface or to a system level controller of an automation system to receive the switch command (CMD).

3. The protection apparatus (1) according to claim 1 or 2 wherein the at least one semiconductor power switch (5) provided in the power supply path (10) comprises an IGBT or a power MOSFET having a blocking voltage which exceeds the normal operation voltage of the power supply voltage, U_{IN}, applied to the input terminal (2) of the power supply path (10), wherein a control gate (21) of the at least one semiconductor power switch (5) is connected directly to a driver output (OUT) at a high voltage side (6B) of the driver circuit (6).

4. The protection apparatus (1) according to any of the preceding claims 1 to 3, wherein the protection apparatus (1) comprises three input terminals (2-1, 2-2, 2-3) and three output terminals (3-1, 3-2, 3-3) connected with each other via associated power supply paths (10-1, 10-2, 10-3), wherein for each power supply path (10-1, 10-2, 10-3) an associated overvoltage detection circuit, ODC, (12-1, 12-2, 12-3) is provided wherein the overvoltage detection circuit, ODC, (12-i) is connected to the input terminal (2-i) and/or the output terminal (3-i) of the respective power supply path (10-i).

5. The protection apparatus (1) according to any of the preceding claims 1 to 4, wherein the driver circuit (6) is adapted to switch off the at least one semiconductor power switch (5) provided within the power supply paths (10) within a switch-off period of less than 1 millisecond defined by the signal propagation delays along the first control line (13, 20) and along an internal circuitry of the driver circuit (6).

6. The protection apparatus (1) according to claim 5, wherein the signal propagation delay of the internal circuitry of the driver circuit (6) between the driver input (IN) at the low voltage side (6A) of the driver circuit (6) and the driver output (OUT) at the high voltage side (6B) of the driver circuit (6) is less than 200 nsec.

7. The protection apparatus (1) according to any of the preceding claims 1 to 6, wherein each overvoltage detection circuit, ODC, (12-i) connected to the input terminal (2) or to the output terminal (3) of an associated power supply path (10-i) comprises
- a rectifier (27) adapted to rectify the electrical voltage at the respective terminal (2; 3) and
- an analog-to-digital converter, ADC, (17) adapted to convert the low-pass filtered signal applied to the analog-to-digital converter, ADC, (17) into a digital signal applied to a digital comparator, COMP1, (34) implemented in the microprocessor (8A) of the control unit (8) of said protection apparatus (1) and being adapted to compare the low-pass filtered signal output by the analog-to-digital converter, ADC, (17) with a first adjustable digital threshold value, TH1, to detect a low-frequency drift of the electrical voltage at the respective terminal (2; 3) and is further adapted to generate a high logic signal if a low-frequency drift is detected.

8. The protection apparatus (1) according to claim 7 wherein each overvoltage detection circuit, ODC, (12-i) further comprises a fast analog comparator, COMP2, (36), in particular a Schmitt trigger circuit, adapted to compare the rectified voltage output by the rectifier (27) with a threshold set point, TH2, to detect overvoltage transients in the electrical voltage of the respective terminal (2; 3) of said protection apparatus (1), and is further adapted to generate a logic enable signal to enable a switch-off of at least one semiconductor power switch (5) provided in the associated power supply path (10) by the driver circuit (6) if an overvoltage transient is detected by the analog comparator, COMP2, (36).

9. The protection apparatus (1) according to claim 7 or 8 wherein the logical signal generated by the digital comparator, COMP1, (34) implemented in the microprocessor (8A) of the control unit (8) and the logic enable signal generated by the analog comparator, COMP2, (36) of the overvoltage detection circuit, ODC, (12) are logically combined by an AND gate (14) of the overvoltage detection circuit, ODC, (12) to provide a logical voltage state signal indicating a detected momentary voltage state of the respective terminal (2; 3) of the associated power supply path (10), wherein the logical voltage state signal is applied to the driver input (IN) at the low voltage side (6A) of the driver circuit (6).

10. The protection apparatus (1) according to any of the preceding claims 7 to 8 further comprising an analog high-pass filter, HPF, (28) provided between the rectifier (27) and the analog comparator, COMP2, (36) and adapted to perform a high-pass filtering of the rectified voltage output by the rectifier (27).

11. The protection apparatus (1) according to any of the preceding claims 7 to 10 wherein the rectifier (27) of the overvoltage detection circuit, ODC, (12) is connected via a potential separation circuit (26) to the associated power supply path (10).

12. The protection apparatus (1) according to any of the preceding claims 1 to 11 wherein the driver circuit (6) is adapted to supply a supervision signal to the microprocessor (8A) of the control unit (8) adapted to inform the microprocessor (8A) about a current operation state of the driver circuit (6) and/or about a current switching state of the at least one semiconductor power switch (5).

13. The protection apparatus (1) according to claim 8, wherein the threshold set point of the analog comparator, COMP2, (36) of the overvoltage detection circuit, ODC, (12) is set by the microprocessor (8A) of the control unit (8) via a digital-to-analog converter, DAC, (38), wherein the threshold set point, TH2, comprises in a first operation mode of the protection apparatus (1) a fixed threshold and comprises in a second operation mode of the protection apparatus (1) a moving threshold.

14. The protection apparatus (1) according to any of the preceding claims 1 to 13 further comprising a load current sensor component (7) connected in series with the at least one semiconductor power switch (5) of the power supply path (10), wherein the load current sensor component (7) is adapted to measure continuously the load current, I_{L}, flowing through the at least one semiconductor power switch (5) in the power supply path (10) to the connected electrical load (9), wherein the measured load current, I_{L}, is notified by the load current sensor component (7) to the microprocessor (8A) of the control unit (8) to determine a momentary load state of the electrical load (9) connected to the output terminal (3) of the respective power supply path (10).

15. The protection apparatus (1) according to claim 13 further comprising a current rise speed sensor component (4), in particular a coil, connected in series with the at least one semiconductor power switch (5) and the load current sensor component (7) and adapted to generate a voltage drop (ΔU₄) corresponding to the current rise speed of the load current, I_{L}, flowing from the input terminal (2) via the current rise speed sensor component (4) and the at least one semiconductor power switch (5) and the load current sensor component (7) along the power supply path (10) to the respective output terminal (3) of the power supply path (10),
wherein the driver circuit (6) of the protection apparatus (1) is adapted to detect an occurring overcurrent depending on the voltage drop (ΔU₄) generated by the current rise speed sensor component (4) and a voltage drop (ΔU₅) along the at least one semiconductor power switch (5) applied directly as a sum voltage (U_{∑}) to a driver input (DESAT) at a high voltage side (6B) of the driver circuit (6) and to switch off said at least one semiconductor power switch (5) automatically upon detection of an overcurrent within a switch-off period of less than 1 msec to provide protection against overcurrent,
wherein the switch-off period of less than 1 msec is defined by the signal propagation delays along a control signal loop including a connection circuitry which connects the current rise speed sensor component (4) with the driver input (DESAT) at the high voltage side (6B) of the driver circuit (6) and an internal circuitry within the high voltage side (6B) of the driver circuit (6).

16. The protection apparatus (1) according to any of the preceding claims 1 to 14 comprising
a first overvoltage detection circuit, ODC1, which is connected to the input terminal (2) of the associated power supply path (10) and is adapted to determine a momentary voltage state at the input terminal (2) and comprising
a second overvoltage detection circuit, ODC2, connected to the output terminal (3) of the associated power supply path (10) and adapted to determine a momentary voltage state at the output terminal (3).

17. The protection apparatus (1) according to claim 16 wherein the momentary voltage state at the input terminal (2) determined by the first overvoltage detection circuit, ODC1, and the momentary voltage state at the output terminal (3) determined by the second overvoltage detection circuit, ODC2, are processed to determine a momentary overall voltage state at both terminals (2; 3) of said protection apparatus (1) which are logically combined by a logic circuit to trigger the driver circuit (6) of said protection apparatus (1) to switch off the at least one semiconductor power switch (5) automatically if an overall overvoltage state at both terminals (2; 3) of said protection apparatus (1) has been detected.

18. The protection apparatus (1) according to any of the preceding claims 15 to 17 wherein the current rise speed sensor component (4), the at least one power switch (5) and the load current sensor component (7) are connected in series along the power supply path (10) and form a secondary current path (1B) provided between the input terminal (2) and the output terminal (3) of the protection apparatus (1), wherein a primary current path (1A) of said protection apparatus (1) including a controllable mechanical switch, MSW, is provided between the input terminal (2) and the output terminal (3) of said protection apparatus (1) connected in parallel to the secondary current path (1B).

19. A method for providing protection for an electrical load (9) against an overvoltage,
the method comprising the steps of:
- detecting (Sl) by an overvoltage detection circuit (12) an overvoltage at a power supply path (10) between an input terminal (2) which receives a power supply voltage and an output terminal (3) to which the electrical load (9) is connected to receive a load current, I_{L};
- generating (S2) by the overvoltage detection circuit (12) upon detection of an overvoltage in a power supply path (10) a switch-off control signal travelling along control lines (12, 20) and gates (14) to a driver input (IN) of a driver circuit (6) to trigger an automatic switch-off of at least one semiconductor switch (5) provided in the power supply path (10) within a short switch-off period of less than 1 msec defined by the signal propagation delay of the control lines (12, 20), gates (14) and by the inner circuitry of the driver circuit (6).
